# EUROPEAN PATENT SPECIFICATION

(11) **EP 4 381 189 B1**
(45) Date of publication and mention of the grant of the patent: **30.04.2025**
(21) Application number: 22789921.8
(22) Date of filing: 27.09.2022
(51) Int. Cl.: F03D 80/50

(54) **WIND TURBINE BLADE, LADDER SUPPORT ASSEMBLY, WIND TURBINE AND METHOD FOR PROVIDING ACCESS TO THE INTERIOR OF A HOLLOW BLADE OF A WIND TURBINE**
WINDTURBINENSCHAUFEL, LEITERTRÄGERANORDNUNG, WINDTURBINE UND VERFAHREN ZUR BEREITSTELLUNG EINES ZUGANGS ZUM INNEREN EINER HOHLEN SCHAUFEL EINER WINDTURBINE
PALE D'ÉOLIENNE, ENSEMBLE DE SUPPORT D'ÉCHELLE, ÉOLIENNE ET PROCÉDÉ DE FOURNITURE D'ACCÈS À L'INTÉRIEUR D'UNE PALE CREUSE D'UNE ÉOLIENNE

(30) Priority: 29.09.2021 EP 21199772
(43) Date of publication of application: 12.06.2024
(73) Proprietor: Siemens Gamesa Renewable Energy A/S, 7330 Brande (DK)
(72) Inventor: JENSEN, Martin Binderup, 7330 Brande (DK)
(74) Representative: SGRE-Association
(86) International application number: PCT/EP2022/076781
(87) International publication number: WO 2023/052334

(56) References cited:
- EP-A1- 2 698 529
- EP-A1- 3 211 221
- CN-U- 202 108 674
- US-A1- 2008 118 365

## Description

The invention relates to a method for providing access to the interior of a hollow blade of a wind turbine, wherein the blade is attached to a rotatable hub of the wind turbine, wherein the interior of the blade is accessible from the hub region through a manhole in a base plate at a root-side end section of the blade. Furthermore, the invention relates to a ladder support assembly and a wind turbine.

In order to increase the maximum energy output, wind turbines are constructed in increasing sizes. In particular off-shore wind turbines nowadays have rotor blades with root diameters between 3 m and 8 m or even more. Therefore, the root-side end portion of the blades also have inner diameters that exceed the size of a worker and therefore comprise sections which are outside of an area that is hand-accessible by a worker standing inside the hollow blade.

Depending on the type of the blade, it may be necessary to enter the blade from time to time, for instance in order to perform maintenance routines or repair procedures in the interior of the blade. Therefore, it is known to provide a manhole in a base plate of the blade through which a worker can enter the interior of the hollow blade. However, in particular at large blades, depending on the orientation of the blade or the rotor, respectively, the manhole may be in such a height that it is not reachable by a worker and therefore not available for entering the section of the blade that lies behind the base plate.

Generally, the position of the manhole in relation to an entry point inside the hub may be changed by rotating the rotor of the wind turbine, so that the manhole is placed in an accessible position. However, placing the rotor blade in such a position may limit the areas in the interior blade, which are accessible for the worker. For example, when the blade has a diameter of 3 m or more, not all sections of an interior surface of the blade can be reached by a worker in the position of the blade, in which the interior of the blade is accessible through the manhole.

This leads to the problem that depending on the blade position, either the blade cannot be entered through the manhole, since the manhole is in a position where it cannot be reached by a worker, or that the blade can be entered through the manhole, but not all sections of the interior surface are oriented such that they can be reached by the worker standing in the interior of the blade. However, since it is desirable that all sections of an interior surface of the blade are accessible for performing maintenance procedures, there is the need providing access to the blade in various rotor positions.

US 2008118365 A1 discloses a bulkhead for a wind turbine. The wind turbine includes a rotor hub and a rotor blade operatively attached to the rotor hub. The rotor blade includes a blade root. The bulkhead includes multiple access openings with closable hatches and is arranged in or on the blade root or in the area between the blade root and the rotor hub.

CN 202108674 U presents a wind wheel hub of wind turbine generator system. A hub security device is fixed in the wind wheel hub; one end of the hub security device is connected with the generator; the hub security device comprises a connecting plate and a cat ladder; the cat ladder is a framework-type structure; one end of the cat ladder is connected with the generator through the connecting plate; and the pedals of the cat ladder have patterns. Through the adoption of the structure, safety problem of working personnel during emergency operation accidents can be properly solved, for example, when the hub rotates suddenly, the working personnel can hold the cat ladder which is connected with the generator and fixed in position, so that the working personnel on the cat ladder can rotate with the hub regularly.

EP 3211221 A1 discloses a rotor hub for a wind turbine generally including a hub body defining both a plurality of blade flanges and a plurality of access ports spaced apart from the blade flanges. In addition, the rotor hub may include a ladder assembly extending within an interior of the hub body. The ladder assembly may include a plurality of platforms, with each platform defining a planar surface and being circumferentially aligned with a respective one of a plurality of access ports. The ladder assembly may also include a connecting frame extending between each pair of adjacent platforms so as to couple the adjacent platforms to one another.

The invention is defined by a wind turbine blade according to independent claim 1, a ladder support assembly for a wind turbine according to independent claim 8, and a method for providing access to the interior of a hollow blade of a wind turbine according to independent claim 11. Further aspects of the invention are defined in the dependent claims.

The invention is based on the objective to provide an improved method for providing access to the interior of a hollow blade of a wind turbine.

According to the invention, this problem is solved by a method as initially described that comprises the steps of:
- Arranging the blade in a first position, in which the manhole is accessible to a worker from a stand surface in the interior of the hub, wherein the stand surface remains stationary during rotation of the hub,
- Mounting a ladder support assembly to the base plate at or in the vicinity of at least one edge section of the manhole,
- Arranging the blade in a second position by rotating the hub, wherein a distance between the manhole and the stand surface is larger than in the first position, and
- Mounting at least one ladder to the ladder support assembly for accessing the interior of the blade.

In a first step, the blade is arranged in the first position, so that the manhole is accessible for a worker, who stands in the interior of the hub on a stand surface. The blade can be arranged in the first position either by actively rotating the rotor, so that the blade to be entered is arranged in the first position. Alternatively, it is also possible to brake for instance a rotating rotor so that the rotor stops with the blade to be entered in the first position.

The blade to be entered comprises a base plate at a root-side end section of the blade, which separates the interior of the hollow blade from the interior of the hollow hub. For entering the interior of the blade, a manhole is provided in the base plate. The manhole may be for instance circular or rectangular and comprises a size which allows a worker to enter the blade. A circular manhole can have for instance a diameter between 50 cm and 1 m, wherein a rectangular or quadratic manhole can have edge lengths between for example 40 cm and 1 m.

In the first position, the manhole is accessible to a worker from a stand surface in the interior of the hub. Accessible means in this context that the worker can reach the manhole, in particular the entire circumference of the manhole, with his hands when he is standing on the stand surface. Therefore, the distance between an upper edge section, or an apex, respectively, of the manhole and the stand surface is between 1.5 m or less. This enables the worker to reach the manhole comfortably when standing on the stand surface. The stand surface may be fixated for instance to a nacelle or to another stationary support structure of the wind turbine so that it does not rotate when the rotor of the wind turbine rotates, or when the blades revolve around the center axis of the hub, respectively.

When the blade is in the first position, the ladder support assembly is mounted to the base plate. The ladder support assembly is mounted at least to an edge of the manhole or in the direct vicinity of an edge section of the manhole. The ladder support assembly may be mounted to the base plate for instance by bolting the ladder support assembly into respective openings in the base plate. It is possible that the manhole is initially covered by a lid, which has to be removed prior to mounting the ladder support assembly to the manhole. It is possible that the same bolt holes, which were used for fixating the lid, are also used for fixating the ladder support assembly to the base plate.

The ladder support assembly is mounted in the first position of the blade, but it is not yet used for entering the blade. The blade is positioned in the first position to allow for comfortably mounting the ladder support assembly to the base plate, hence for mounting the ladder support assembly in a position where it can be reached easily by a worker. Of course, also the ladder support assembly changes its position when the rotor blade is rotated from the first position to the second position. Therefore, the ladder support assembly may be mounted already with respect the subsequently taken second blade position, so that the ladder support assembly allows for correctly fixating the ladder when the rotor blade has been rotated into the second position.

After mounting the ladder support assembly to the base plate, the blade to be entered is arranged in a second position by rotating the hub, or the rotor of the wind turbine blade, respectively. In the second position, the distance between the manhole and the stand surface is larger than in the first position. In particular, the distance between the manhole and the stand surface may be so large that the manhole cannot be reached by a worker standing on the stand surface. In particular, the distance between the lower edge of the manhole in the second position and the stand surface may be more than 1.5 m, in particular 2 m or more. In the second position, at least one ladder is mounted to the ladder support assembly for accessing the interior of the blade. After mounting the ladder to the ladder support assembly, the worker may enter the blade through the manhole using the ladder.

The solution according to the invention has the advantage that the interior of the hollow blade may also be entered in the second position using the, although the manhole is placed in such a distance from a stand surface that a worker cannot enter it without the aid of a ladder.

The positioning of the blade in the first position allows for mounting the ladder support assembly comfortable to the manhole of the blade. If a maintenance procedure has to be performed for instance around the entire circumference of the inner surface of the blade, it is possible that the worker also enters the blade in the first position to perform the respective maintenance or repair procedures on the areas accessible in the first position.

After turning the blade in the second position, the areas of the inner surface of the blade that are accessible to the worker may change since the orientation of the blade towards the stationary stand surface has changed due to the rotation of the blade. In particular, when rotating the blade for instance around 180°, the section which was on the bottom side of the blade in the first position is then on top of the blade in the second position and vice versa.

The method according to the invention has the advantage that by mounting the ladder support assembly in the first blade position, a secure entering of the blade becomes possible by mounting a ladder to the ladder support assembly in the second blade position. Furthermore, the attachment of the ladder is facilitated since it can be attached in the second blade position already in the correct orientation for entering the manhole. Advantageously, an upside-down attachment of the ladder in the first blade position, which is cumbersome and difficult, can be avoided.

In particular, the method may be conducted on blades which have a diameter at their root-side of for more than 2 m, in particular of more than 3 m or of more than 5 m. For example, the diameter of the wind turbine blade at its root-side and may be between 2 m and 15 m, in particular between 3 m and 8 m.

The method according to the invention has the additional advantage that the blade does not have to be pitched for changing the position of the manhole relative to the stand surface in the interior of the hub. Normally, when turbine blades can be pitched around 90°, which would allow for changing the position of the manhole in the base plate of the blade with respect to the stationary stand surface. However, since the rotor is stopped during the maintenance procedures, changing the pitch of the blade is not desired, since normally the blades are pitched into a parking position, in which the wind acting on the front side of the rotor causes no or at least no significant forces acting of the rotor. Advantageously, by the method according to the invention, the blades can also be entered in a different position so that a pitching of the blade and therefore the occurrence of undesired loads in components of the wind turbine, in particular of a main bearing, a shaft, a brake used for fixating the rotor or the like, can be avoided.

Access to different sections of the inner surface of a wind turbine blade may be required for instance for checking the condition of a shell of the blade and/or for conducting repair procedures, for instance on the top side and the bottom side of a web which spans through the interior of the blade. Also some types of sensors, for instance LOPC sensors, may be required to be frequently accessed in the course of maintenance procedures. These sensors may be placed for instance in a 3 o'clock, a 6 o'clock, a 9 o'clock and a 12 o'clock position around the essentially circular root section of the wind turbine blade. In larger blades, the sensor placed in the 12 o'clock position may not be reached by a worker with stands on the bottom surface of the blade and hence on top of the 6 o'clock position. Advantageously, by the method according to the invention, the sensor in the 12 o'clock position may be reached using the ladder and the ladder support assembly when the blade has been arranged in the second position.

Preferably, the blade is oriented in the first position at an angle between 90° and 120°, in particular at an angle of 105°, with respect to a vertically upward position of the blade, and/or the blade is oriented vertically upwards or at an angle between 255° and 285°, in particular at an angle of 270°, in the second position.

The vertically upward position of the blade corresponds for instance to the 0° position. The angle between the vertical upward orientation and the position of the blade may be measured either in clockwise direction or in anti-clockwise direction, for instance depending on the position of the manhole with respect to a center point of the base plate, or an eccentrical offset of the manhole, respectively.

In a preferred embodiment of the invention, the ladder support assembly is mounted at least at or in the vicinity of an upper edge section of the manhole in the first position of the blade. When the blade is then rotated to another side of the hub, the ladder support assembly is arranged at a lower edge section of the manhole facilitating the access to the blade using the ladder attached to the ladder support assembly, in particular when the blade to be entered is rotated around approximately 180°.

Preferably, the ladder support assembly comprises at least one frame-shaped or plate-shaped, in particular ring-shaped or ring segment-shaped, support segment, which is mounted to the base plate surrounding the manhole at least partly. The support segment allows for attaching further components of the ladder support assembly to the manhole, in particular perpendicular to the opening. The ladder, which is mounted to the ladder support assembly when the blade has been rotated to the second position, may be mounted directly to the support segment or to a further component of the ladder support assembly that has been mounted to the support segment when the blade is in the first position.

Preferably, the ladder support assembly comprises at least one platform segment, wherein the ladder support assembly is arranged at the manhole in such manner that the platform segment extends through the manhole and/or that the platform segment is arranged on the bottom side of the manhole when the blade is in the second position. In particular, the platform segment may be used when the blade is rotated in a second position, which is different from a vertical orientation of the rotor blade. The platform segment facilitates the passage of a worker through the manhole, since the worker may move through the manhole on the platform segment, for instance by walking or crawling.

It is possible that further components of the ladder support assembly are mounted to the platform segment. As further components, for instance one or more handrails and/or one or more support struts, which for instance support the platform segments against the support segment and/or against the base plate, are mounted. It is also possible that the platform segment comprises on or more mounting sections for fixation of one or more ladders and/or that one or more mounting sections are attached to the platform segment. Also these components are mounted in the first blade position, wherein their orientation is adjusted in such manner that they may be properly used when the blade to be entered has been rotated to the second position.

In a preferred embodiment, the at least one ladder is hung to the ladder support assembly. When the rotor blade has been rotated to the second position, one ladder may be attached to the ladder support assembly by hanging to the ladder support assembly, in particular by hanging it to a mounting section of the ladder support assembly. The mounting section may comprise for instance one or more hooks to which for instance a top portion of the ladder may be attached. Alternatively, the ladder may comprise one or more hooks at its top portion which may be engaged in a corresponding counterpart at the mounting section of the ladder support assembly. It is possible that the ladder is fixated by at least one fixation mechanism and/or by using one or more fastening means like bolts after it has been attached to the ladder support assembly.

The ladder may comprise one or more support segments, which allow for supporting the ladder against the base plate of the wind turbine blade, in particular when a platform of the ladder support assembly is used. In this case, the ladder may be hung into an edge of the platform segment arranged in a distance to the manhole so that also between the ladder and the base plate of the blade a gap remains. This gap can be bridged by one or more supporting structures, for instance supporting feed or the like, which may be mounted on the ladder prior or after its attachment to the ladder support assembly and which support the ladder against the base plate facilitating the access to the manhole.

Preferably, two ladders are mounted to the ladder support assembly, wherein the first ladder is arranged on the side of the base plate facing the interior of the hub and wherein the second ladder is arranged on the side of the base plate facing the interior of the blade. This allows for climbing up from the stand surface in the hub through the manhole and to descend from the manhole into the interior of the blade on the other side of the base plate using the second ladder.

In a preferred embodiment, the second ladder is mounted to the ladder support assembly by sliding it through the manhole towards the interior of the blade on the ladder support assembly and by attaching it on the ladder support assembly, in particular by hanging it to the ladder support assembly. The second ladder may be sled for instance on a platform segment or another guiding structure of the ladder support assembly. The second ladder may be attached to the ladder support assembly by hanging it to the ladder support assembly, so that the ladder expands from the ladder support assembly towards the bottom portion of the interior of the blade to be entered.

Like the first ladder, also the second ladder may be hung into an edge of the platform segment arranged in a distance to the manhole so that also between the ladder and the base plate of the blade a gap remains. This gap can be bridged by one or more supporting structures, for instance supporting feed or the like, which may be mounted on the second ladder prior or after its attachment to the ladder support assembly and which support the second ladder against the base plate facilitating the access to the manhole.

A ladder support assembly for a wind turbine according to the invention comprises at least one frame-shaped or plate-shaped, in particular ring-shaped or ring segment-shaped, support segment, which is mounted to a base plate of a wind turbine blade surrounding a manhole in the base plate at least partly, wherein the ladder support assembly comprises at least one mounting section for mounting a ladder to the ladder support assembly. The frame-shaped or plate-shaped support segment is mounted at or in the vicinity of a manhole to a base plate and provides at least one mounting section for mounting a ladder to the ladder support assembly, in particular by hanging one side of the ladder to the ladder support assembly.

Preferably, the ladder support assembly comprises two mounting sections, wherein in the mounted state of the ladder support assembly, one of the mounting sections is arranged on each of the opposing sides of the base plate. Hence, one of the mounting sections can be used for attaching the first ladder to allow for ascending from the standing surface in the hub towards the manhole and the second mounting section can be used for attaching the second ladder to allow for descending from the manhole into the interior of the blade.

Preferably, the ladder support assembly comprises at least one platform segment, wherein the ladder support assembly is arrangeable on the manhole in such manner that the platform segment extends through the manhole and/or that the platform segment is arranged on one side of the manhole allowing a worker to pass through the manhole on the platform segment. In is in particular possible that the platform segment is attached or attachable perpendicular or essentially perpendicular to the support segments, which are mounted to the rim of the manhole.

A wind turbine according to the invention is equipped with at least one ladder support assembly according to the invention, wherein the wind turbine comprises at least one blade with a base plate adapted for attachment of the ladder support assembly. Preferably, all blades of the wind turbine may be adapted for the attachment of the ladder support assembly. The wind turbine may comprise in particular three blades mounted to a hub of the wind turbine. The ladder support assembly may be stored inside the wind turbine, for instance in the hub or in the nacelle adjacently to the hub.

Besides the ladder support assembly, also one or more ladders which may be mounted to the ladder support assembly may be stored in the wind turbine.

The invention further refers to a wind turbine blade, comprising a hollow blade body with a blade root and a base plate arranged at a root-side end section of the blade. The inventive blade comprises a manhole, through which the interior of the blade is accessible, wherein the base plate is provided with mounting means arranged at the or close to the manhole and adapted to directly or indirectly mount at least one ladder to the base plate.

According to an embodiment, there is not more than one single manhole provided in the base plate. By this and optimal configuration of the base plate for structural loads is obtained. The blade comprises only one manhole and has no further openings of a comparable size, which would allow a person to climb through. A central purpose of the base plate is to stiffen the blade at the root-side end. This function is counteracted, when a larger number of manholes is provided to give access to the interior at different locations. A base plate having several manholes therefor needs to be comparably massive in order to be stiff enough to fulfill its stiffening function. As the inventive blade comprises only one manhole, the stiffness of the base plate is high, and no measures need to be taken to enhance its stiffness. Further, the base plate is provided with mounting means arranged at the or adjacent to the single manhole and adapted to directly or indirectly mount at least one ladder to the base plate. This mounting means allows for attaching a ladder, which can be used by a maintenance person to reach the manhole in case the manhole is in a position which is too far away from a stand surface. When the manhole is sufficiently close to the stand surface, the maintenance person can directly access the manhole from the stand surface. But when the manhole is rotated in a position which cannot be reached directly from the stand surface, the person can easily mount a ladder to the mounting means via which he can climb up to the manhole. The mounting means are adapted to either mount the ladder directly to the mounting means without using any further fixation or mounting equipment or items. In this case the mounting means is for example already provided with a mounting interface like hooks or the like at which the ladder can be directly attached. In an alternative, the mounting means are adapted for an indirect fixation of the ladder using some additional mounting or fixation equipment or items which are, when necessary, attached to the mounting means and to which the ladder is finally attached. The mounting means may be arranged directly at the manhole, meaning that they are arranged as close as possible to the manhole. In an alternative the mounting means may also be at a somewhat distanced position to the manhole, as long as the person can easily reach the manhole via the attached ladder.

The inventive blade therefore is both improved in regard of its stiffness respectively its setup, and in regard of a simple accessibility of the single manhole even if it is in a position remote to the stand surface.

The mounting means are preferably adapted to directly or indirectly mount a first ladder at a first side of the base plate facing away from the interior and a second ladder at a second side of the base plate facing to the interior of the blade. This allows for either directly or indirectly arrange a first ladder at the outer side of the base plate allowing the person standing on the stand surface to climb up to the manhole, and to arrange a second ladder at the inner side of the base plate allowing the person to climb down after he passed through the manhole. The base for both ladder attachments is the common mounting means.

The mounting means may be inextricably arranged at the base plate, meaning that the mounting means are firmly attached to the base plate, for example by welding, so that they are not removable. In an alternative, the mounting means may also be detachably arranged at the base plate. The mounting means may for example be fixed by screws or clamps or the like when the blade is either built or after the blade is attached to the hub when the turbine is built. But is can always be removed if need be.

As mentioned, the base plate comprises only one manhole. The manhole preferably has a circular or oval shape. This geometry can easily be cut in the usually metal base plate and does not remarkably affect the stability. It is suitable that a person can easily climb through it, although it is not very large.

The mounting means is as mentioned a central item of the blade. It preferably is or comprises at least one frame-shaped or plate-shaped support segment surrounding the manhole at least partly. Such a frame- or plate-like support segment provides a sufficiently stable mounting interface for either mounting the ladder or the additional mounting equipment. This is especially true when the mounting means is detachably arranged at the base plate, as such a frame- or plate-like design allows for providing sufficient fixation elements for firmly attaching it to the base plate, preferably with fixation elements in form of clamps or the like which are fixed to the base plate rim extending around the manhole.

Preferably the geometry of the mounting means respectively the support element is somehow adapted to the shape or the manhole. As the manhole is preferably round or oval, the support element preferably is U-like, circle-like, oval, or polygonal. These geometries allow for the support element to surround the manhole to a certain extent. But even if the manhole has for example a rectangular shape, also a U-shaped or polygonal support element can at least in part surround the manhole.

According to a further embodiment of the invention the mounting means may comprises two or more different mounting positions allocated at different positions of the support element. As mentioned, the blade may be positioned in different rotational positions depending on which area of the inner of the blade needs to be maintenance. Therefor the manhole may either be arranged in a position close to the stand surface or remote to the stand surface. When only one designated mounting position for the ladder is provided at the support element, the blade may either be arranged in a first position close to the stand surface and in a second position which is for example rotated for 180° relative to the first position and in which the manhole is higher above the stand surface. But when the support element is provided with two or more designated mounting positions respectively interfaces, it is possible to rotate the blade also to designated intermediate positions in which also the ladder can easily be fixated at the support element. This gives more flexibility in regard of possible maintenance positions and the possibility to bring different blade regions in a good position for the upcoming maintenance. Each mounting position or mounting interface is realized by means of respective fixation means or fixation elements, adapted to directly receive a ladder or adapted to receive additional mounting equipment for fixing a ladder.

Preferably the different mounting positions respectively fixation means or fixation elements defining a mounting position are allocated in different circumferential positions, what is especially preferable when the support element has a closed form like a circular form, an oval form, or a polygonal form. Especially at a polygonal form, e.g. a rectangular form or a hexagon or an octagon, which geometries comprise a certain number of linear support element members making the geometry, it is easily possible to provide respective mounting elements or interfaces at each of the support element members, so that the blade may be positioned in four different positions in case of a rectangular form of the support element, in six positions in case of a hexagonal form or in eight positions in case of an octagonal form. Certainly, also other polygonal forms are feasible.

Finally, the base plate may be a single plate, which is provided with the manhole and the mounting means. In an alternative, the base plate may comprise a first plate having a first manhole opening and a second plate arranged in parallel to the first plate and comprising a second manhole opening, which manhole openings are flush with each other and build the manhole. Here, the base plate is a double-plate arrangement with two parallel plates arranged in parallel and close to each other. Both are provided with a manhole opening, which manhole openings are flush and build the single manhole. The mounting means in this case may be mounted only to the outer first plate, wherein additional mounting equipment may be fixated which at least allows for arranging the second inner ladder, or both ladders, if needed.

All details and advantages described in relation to the method according to the invention apply correspondingly to the ladder support assembly and the wind turbine according to the invention. Correspondingly, also the advantages and details described in relation to the ladder support assembly according to the invention apply correspondingly to the method according to the invention and the wind turbine according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a wind turbine according to the invention,
- Fig. 2: the rotor of the wind turbine with a blade to be entered in a first position,
- Fig. 3: the rotor of the wind turbine with the blade to be entered in a second position,
- Fig. 4: a detailed view of the base plate of the wind turbine blade to be entered,
- Fig. 5: a detailed view on a manhole in the base plate with an attached support segment of an embodiment of a ladder support assembly according to the invention,
- Fig. 6: a manhole to which the ladder support assembly is attached,
- Fig. 7: a cut view depicting the attached ladder support assembly with the blade to be entered in the second position,
- Fig. 8: a second ladder attached to the ladder support assembly in the interior of the blade to be entered,
- Fig. 9: a principal partial illustration of a wind turbine blade facing the blade root, which is provides with a mounting means comprising different mounting positions for a ladder, and
- Fig. 10: a principal cut view of a blade comprising a base plate having a first and a second plate, provided with a mounting means with attached first and second ladder.

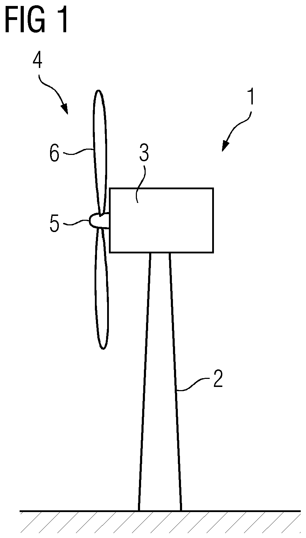

In fig. 1, an embodiment of a wind turbine 1 is shown. The wind turbine 1 comprises a tower 2, which supports a nacelle 3 of the wind turbine 1. To a front side of the nacelle 3, a rotor 4 comprising a hub 5 and a plurality of rotor blades 6 is mounted. During operation of the wind turbine 1, the rotor 4 rotates, in particular to drive a generator (not shown) of the wind turbine 1 for the generation of electrical energy.

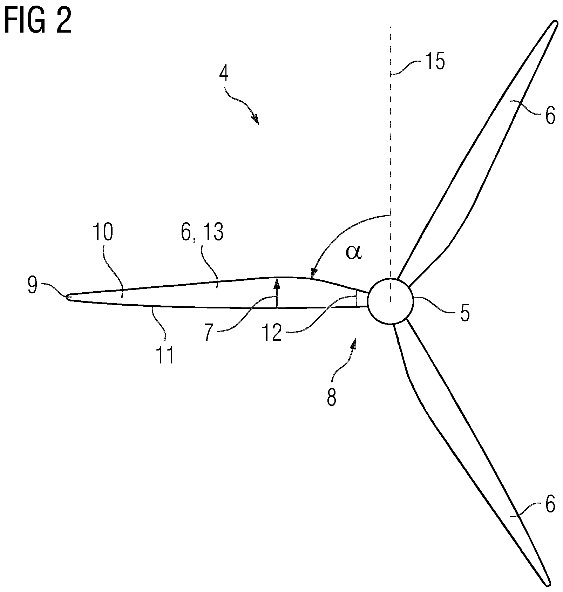

In fig. 2, a detailed view of the rotor 4 is shown. The rotor 4 comprises three rotor blades 6. The rotor blades 6 are attached to the hub 5 at a root-side end 8 of the blades 6 opposite to a tip 9 of the blades 6. The interior 10 of the blades 6 is at least partly hollow and surrounded by a shell 11 of the respective blade 6. The blades 6 comprise each a base plate 12 at their respective root-side end section 8.

In order to perform maintenance routines or repair procedure in the interior 10 of one of the wind turbine blades 6, it may be required that a worker has access to the interior 10 of the respective wind turbine blade 13 to be entered. However, in particular when the rotor blades 6 comprises a large diameter at their root-side end sections 8, not all areas around the inner surface of the shell 11 can be reached by a worker standing in the interior of the blade. In particular, the wind turbine blades 6 can comprise a diameter between 2 m and 15 m, in particular between 3 m and 8 m at their root-side ends 8 so that a worker standing on the bottom side cannot reach an element or a section of the shell 11 located at the top of the blade 13.

To facilitate the understanding of the orientation of the blade 13 to be repaired, an arrow 7 is shown in fig. 2, in which the blade 13 to be entered is arranged in a first position. In this first position, the arrow 7 points from a bottom side to a top side of the blade 13. In the first position the blade is arranged at an angle α = 105°, wherein the angle is measured with respect to a vertical orientation indicated by the dashed line 15 in anti-clockwise direction when looking on the front of the rotor 4, or in clockwise direction when standing in the nacelle and looking towards the hub, respectively.

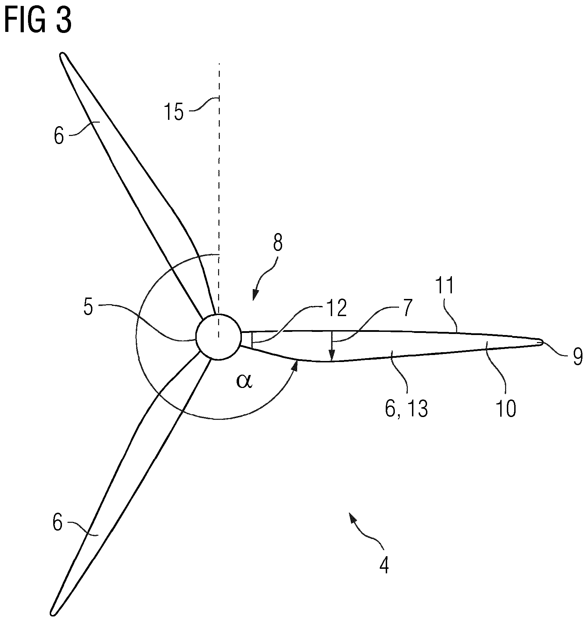

In fig. 3, the rotor 4 is shown after rotation, wherein the rotor blade 13 to be entered is placed in a second position. In the second position, the blade is oriented at an angle of α = 270°. The relative orientation of the arrow 7 towards the blade 13 was not changed to illustrate the effect of the rotation on the orientation of the blade 13.

As can been seen from the arrow 7, the orientation of the blade 13 and its sections of the shell 11 changes from the first position to the second position in such manner that areas or components of the blade 13 mounted on a top portion of the blade 13 in the first position are now on a floor position and vice versa. In particular, for repairing larger blades with diameters of 3 m and more, a rotation of the blade during maintenance procedures allows a worker to reach all the relevant components or sections of the shell 11 from the interior of the blade 10.

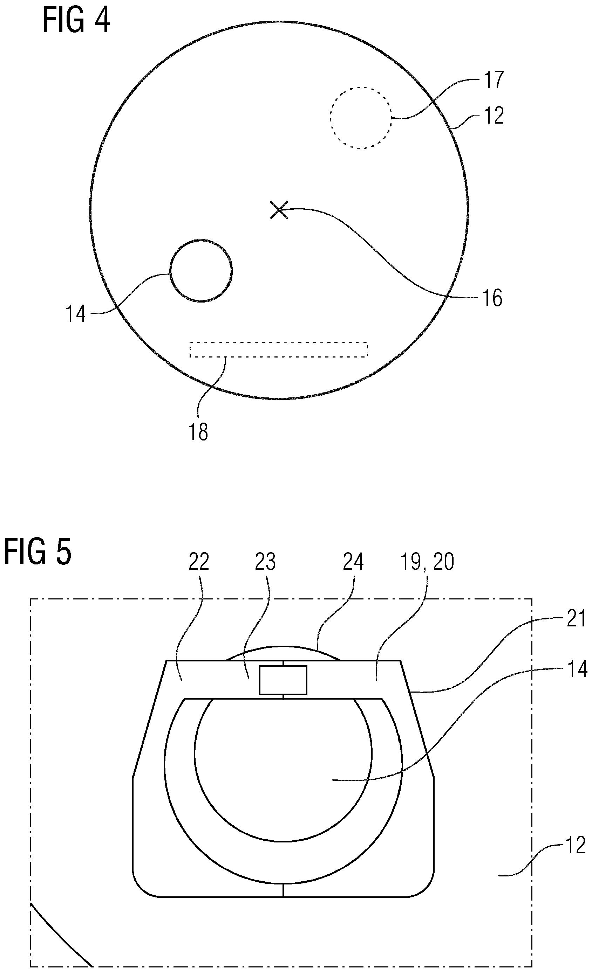

In fig. 4, a detailed view of the base plate 12 of a wind turbine blade 6 is shown. In order to allow for entering of the interior 10 of the blade 6 from the hub 5, the base plate 12 comprises a manhole 14. For entering the interior 10 of the blade 13, the worker must pass through the manhole 14, which is formed as an opening in the base plate 12.

The manhole 14 may have a circular shape as depicted and comprises a diameter that enables a worker to move through the manhole 14. The manhole 14 can have a diameter between for instance 50 cm and 1 m. Also other shapes of the manhole 14 are possible, for example a rectangular or quadratic manhole 14 with edge lengths between for example 40 cm and 1 m may be provided.

Since the manhole 14 is arranged offset from a center 16 of the base plate 12, the manhole changes its position when the blade 13 is rotated into the second position, as depicted in fig. 3. The position of the manhole 14 in the second blade position is schematically indicated with dashed lines 17.

In the first blade position, the manhole 14 is accessible to a worker from a stand surface 18 located in the interior of the hub 5. For example, the distance between an upper edge section, or an apex, respectively, of the manhole 14 and the stand surface 18 is between 1.5 m or less.

However, in the second position, the distance between the manhole 14 and the stand surface 18 is larger than in the first position. The distance from the stand surface to a lower edge of the manhole 14 may be for example more than 1.5 m, in particular more than 2 m or more than 2.5 m.

The stand surface 18 is stationary and does not change its position when the rotor 4 of the wind turbine blade 1 rotates, or when the blade 13 is moved from its first position into its second position, respectively. For example, the stand surface 18 may be the top side of a platform that is fixated to the nacelle 3, or to another structural component of the nacelle 3, respectively.

For example during a repair procedure, in which access is required to four sensors that are arranged equidistantly around the inner circumference of the wind turbine blade 6, access to the blade 13 in both the first and the second position is required in order to access all the sensors. The sensors may be arranged in particular in a 3 o'clock position, a 6 o'clock position, a 9 o'clock position, and a 12 o'clock position around the inner circumference with respect to the first blade position of the blade 13. In particular for larger blades, the topmost sensor, which is in the 12 o'clock position when the blade is oriented in the first position, may not be accessible. However, this sensor will be in the 6 o'clock position when the blade has been rotated to the second position and therefore it is arranged on the bottom side of the interior of the hollow blade 6 and may easily be accessed by the worker.

In an embodiment of a method for providing access to the interior 10 of a hollow blade 6 of a wind turbine 1, first the blade 13 to be entered is placed in the first position, as exemplarily is depicted in fig. 2. In the first position, the manhole 14 in the base plate 12 is accessible to a worker from the stand surface 18 as can be seen from fig. 4. In order to allow for accessing the blade 13 also in the second position, a ladder support assembly 19 is mounted to the base plate 12 at or in the vicinity of the manhole 14, when the rotor blade 13 to be entered is arranged in the first position.

Fig. 5 shows a detailed view of the manhole 14 in the base plate 12 in the first blade position of the respective blade 13. To the rim of the manhole 14, a ladder support assembly 19 is attached. The ladder support assembly 19 comprises at least one support segment 20, which is mounted to the base plate 12 in the vicinity of the manhole 14. In the depicted embodiment, the ladder support assembly 19 comprises to halve plates 21, 22, which are each a ring segment-shaped plate, and which are attached to the bade plate 12 around the circumference of the manhole 14. The support segment 20 comprises a flat portion 23, which is arranged at a top edge 24 of the manhole 14, when the manhole 14 is in the first position.

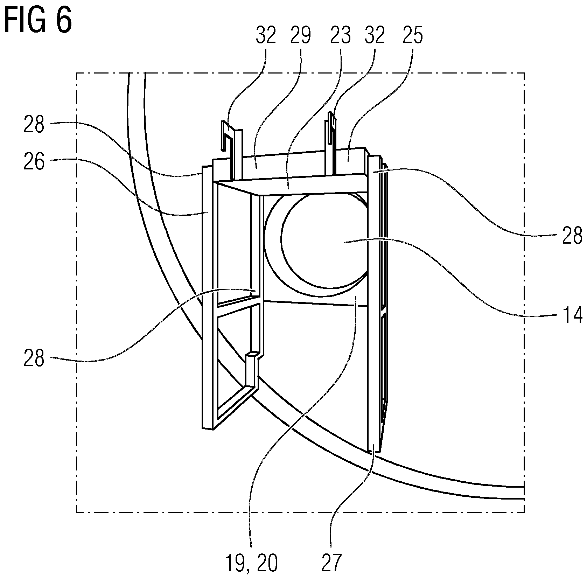

As it is depicted in fig. 6, further components of the ladder support assembly 19 can be assembled when the rotor blade 13 to be entered is in the first position. The ladder support assembly 19 comprises a platform segment 25, which is arranged to the flat section 23 of the support segment 20. In addition, the ladder support assembly 19 comprises two handrails 26, 27, which are attached to the platform segment 25 and which are used to support the platform segment 23 to the support segment 20 and to the base plate 12. The handrails 26, 27 can be attached to the platform segment 23 and/or to the support segment 25 for instance by a plurality of bolted connections 28.

The platform segment 23 is mounted in the first position to the flat portion 23 of the support segment and hence to an upper edge of the manhole 14 since the blade 13 is rotated to the second position prior to an entering of the manhole 14. Accordingly, the platform segment 23 will change its position, in particular in such manner that the platform segment 23 is located at a lower edge of the manhole 14 after the blade has been rotated to the second position.

After mounting the ladder support assembly 19 to the manhole 14, or to the base plate 12, respectively, the blade 13 is rotated into the second position. With respect to a view direction from the interior of the nacelle 3 towards the center of the hub 5, the rotor blade 13 to be entered may be rotated for instance from the right side to the left side or vice versa. By rotation of the blade 13, also the base plate 12 revolves around a center axis of the rotor 4 so that the base plate 12 is arranged in the second position at least essentially upside down with respect to the first position.

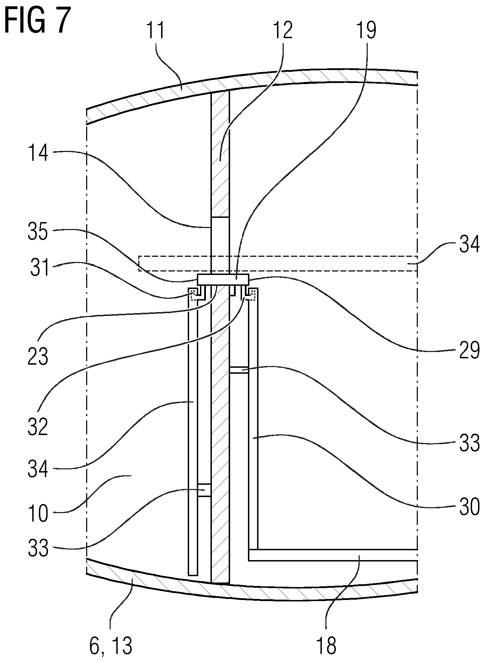

In fig. 7, a cut view of the base plate 12 is shown, wherein the blade 13 to be entered has been rotated in the second position. The rotor blade 13 is on the left side and the hub is on the right side of the base plate 12.

In this second position, the distance between the manhole 14 and the stationary stand surface 18 is larger than in the first position. The platform segment 23 comprises a mounting section 29 for mounting a ladder 30 to the ladder support assembly 19. In this embodiment, for instance a top rung 31 of ladder 30 is attached to the mounting section 29 which comprises two hooks 32 for hanging the ladder 30 to the ladder support assembly 19. Please note that in fig. 7 the handrails 26, 27 are omitted for the sake of clarity. The ladder 30 mounted to the ladder support assembly 19 at the hub-ward side is supported to the base plate 12 by a supporting section 33.

To allow for also entering the interior of the hollow blade, which is located in fig. 7 of the left-hand side, a further ladder 34 is mounted to the ladder support assembly 19. Therefore, the further ladder 34 is attached to a further mounting section 35 of the ladder support assembly 19. The further mounting section 35 may comprise for instance one or more hooks 36, to which the further ladder 34 can be hung.

In order to arrange the further ladder 34 on the blade-side of the base plate 12, the further ladder 34 may be sled through the manhole 14 on the ladder support assembly 19, for instance on the platform segment 25. The insertion of the ladder 34 is shown schematically by dashed lines in fig. 7. Also the further ladder 34 may comprise a supporting section 33 for supporting the ladder against the blade-wise side of the base plate 12. The supporting section may be mounted in particular prior to the attachment of the further ladder 34 to the ladder support assembly 19.

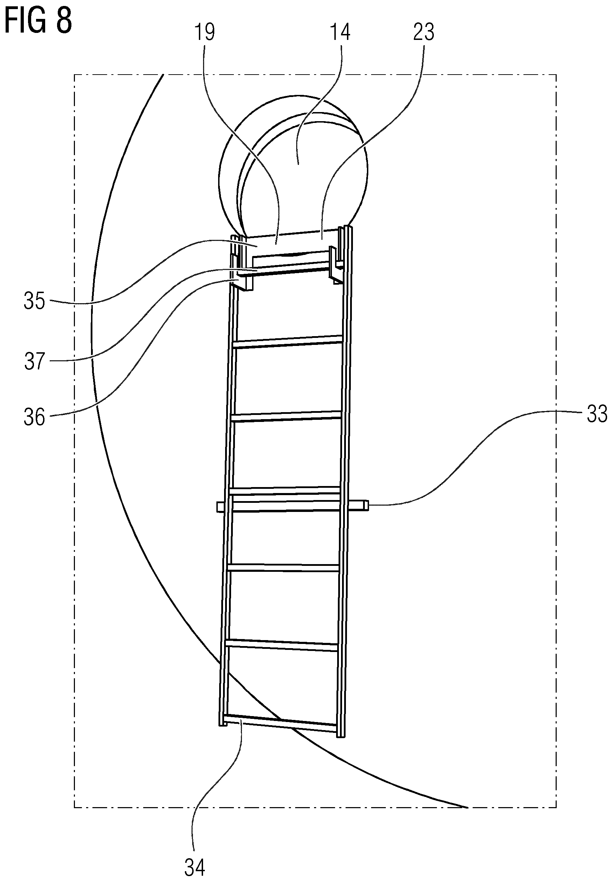

In fig. 8, a view on the blade-side of the base plate 12 is shown. The further ladder 34 is attached to the ladder support assembly 19, which is arranged on the bottom side of the manhole 14. A worker, which has to enter the hollow interior of the blade 6, may walk or crawl through the manhole 14 on the platform segment 23. The ladder is hung to the ladder support assembly 19 for instance by engaging a top rung 37 of the ladder 34 into the hooks 36 of the further mounting section 35. Since in the second blade position, both ladders are aligned vertically towards the lower edge of the manhole 14, a worker can climb from the stand surface 18 to the platform segment 25 of the ladder support assembly 19 and descend into the blade.

After performing the necessary maintenance routines and/or repair procedures, the ladders 33, 34 as well as the ladder support assembly 19 may be removed by performing the aforementioned step in reverse direction. The wind turbine 1 is equipped with the ladder support assembly 19 and/or the ladders 33, 34, which may be stored for instance in the interior of the hub 4 and/or in the interior of the nacelle 3, respectively.

In an alternative embodiment of a method for providing access to the interior of one of the blades 6, the blade 13 to be entered may be arranged in the second position at an angle α = 0°, so that it points vertically upwards. In this case, the blade can be entered by a single ladder hung to the ladder support assembly 19, wherein the ladder is arranged at least essentially perpendicular to the base plate 12 so that a worker can climb up and enter the blade through the manhole 14.

In is in particular possible that in this case, the support segment 20 of the ladder support assembly 19, which is attached to the edge of the manhole 14, comprises a mounting section 29, for instance with two hooks as previously described, wherein the hooks are oriented in such manner that the ladder can be hung to the ladder support assembly 19 when the blade 13 is in its second, vertical position. In this embodiment, it is possible that the platform segment 23 and/or the handrails 26, 27 are omitted, respectively not attached to the support segment 20.

Although the present invention has been described in detail with reference to the preferred embodiment, the present invention is not limited by the disclosed examples from which the skilled person is able to derive other variations without departing from the scope of the invention.

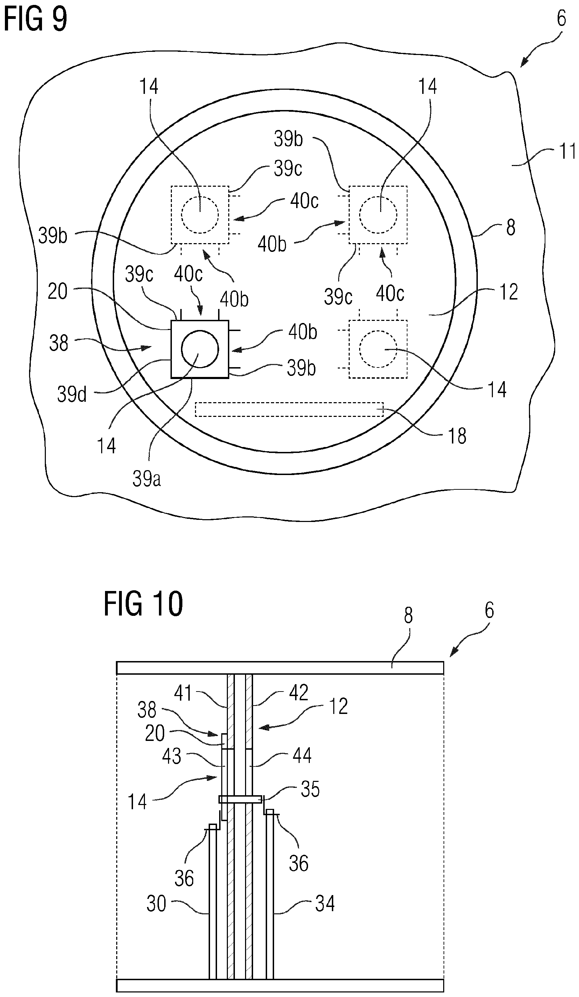

Fig. 9 shows a principal illustration of a wind turbine blade 6, comprising, as usual, an outer shell 11 and a root with a root-side end section 8, to which a base plate 12 is attached. The figure shows a view to the root. The base plate 12 comprises, like in the previous embodiments, only one manhole 14, which is positioned eccentric to the center 16. The base plate is provided with a mounting means 38 comprising a or built of a frame-like support segment 20 and optional some additional mounting equipment or elements, which mounting means 38 respectively support segment 20 has, in this example, a polygonal, here a rectangular shape. The mounting means respectively support segment (and maybe some additional fixation equipment or elements) is permanently attached to base plate. Permanently means in this circumstance, that the mounting means respectively the support segment (and the optional fixation equipment) is already attached to the base plate at the blade manufacturing site and also remains at the base plate when the blade is attached to the hub respectively when the wind turbine is finally set up and working, so that it remains over the lifetime of the blade. The attachment may be inextricable or detachable. This can either be achieved for example by welding e.g. the support segment 20 it to the metal base plate, or by using fastening means like screws or bolt and nuts or clamping elements.

The support segment 20 is arranged close to the manhole 14 and surrounds is completely like a frame. The rectangular support segment 20 is built from four longitudinal support element members 39a, 39b, 39c, 39d. Two of these members, i.e. the members 39b and 39c, are equipped with fixation means 40b, 40c, which can be any kind of fixation elements providing a fixation interface for either attaching a ladder directly to the support segment 20 or some additional fixation equipment to which finally a ladder is attached, so that the ladder is fixated indirectly to the support segment 20. The fixation means are therefor arranged in different circumferential positions relative to the center of the manhole 14 or the frame-like shape of the support element 20.

When the blade is in a rotational position, in which the manhole is, as shown, close to a stand surface 18, the person can directly access the manhole 14 from the stand surface 18. This allows an inspection or working of the lower inner blade body area being at the bottom in this rotational position. When a surface area which is located more to the right side of the blade shall be maintenance, the blade is rotated clockwise for about 90°, so that the manhole 14 the upper left position show in dashed lines, together with the support segment 20. Due to the 90° rotation, the support element member 39b is now in the lower position together with its fixation means 40b, to which now the ladder can be attached so that the person can reach the elevated manhole 14 from the stand surface 18. When another inner area shall be maintenance, the blade may be rotated clockwise for another 90° so that the manhole 14 is in the upper right position. In this position the member 39c is the lowest with its fixation means 40c, to which now the ladder can be fixated. Now the area opposite to the area, which was at the bottom in the first rotational position, can be maintenance. Finally, the blade can be rotated clockwise for another 90° what again brings another inner area in a position for maintenance. The manhole 14 now is again in a lowered position in which it is accessible directly from the stand surface 18, no ladder is necessary. Certainly, each position may be taken directly. This embodiment allows to bring various inner surface areas in a good position for the maintenance work and always allows the person to get an easy access to the manhole, either directly from the stand surface, or via an attached ladder, which can firmly and securely be attached to the support segment in designated rotational positions, where the ladder is necessary to reach the manhole 14.

The shown rectangular design is only an example. The support segment 20, equipped with one or more fixation means, may also have a different shape, e.g. a circular or polygonal shape other than rectangular. Even a U-shape is feasible, which partly surrounds the manhole 14, and which may also be equipped with respective fixation means.

Fig. 10 shows a cut view of a blade 6 in the root-side end section 8 and shows a base plate 12 which is a kind of sandwich arrangement made of two separate plates. The base plate 12 comprises a first plate 41 closer to the open end of the root-like end section 8, and a second plate 42 facing the inner of the hollow blade body. The plates 41, 42 are of similar size and are arranged in parallel and close to each other. The plate 41 is provided with a first manhole opening 43, the second plate 42 is provided with a second manhole opening 44. Both manhole openings 43, 44 are flush and build the common manhole 14.

A mounting means 38 comprising a support segment 20 is permanently attached to the first plate 41 facing to the open end of the root-like end section 8, to which mounting means 38 a first ladder 30 is attached. The mounting means comprised hooks 32, which may build a fixation means as described in regard of fig. 9. As an additional, also permanent fixation equipment, a mounting section 35 comprising further hooks 36 is attached to the support segment 20. The mounting segment 35 extends through the manhole, i.e. both manhole openings, so that the hooks 35 are at the inner side of the second plate 42. A second ladder 34 is attached to the hooks 35. While the person can climb up to the manhole 14 via the first ladder 30, he can climb down to the maintenance area via the second ladder 34, and vice versa.

## Claims

1. Wind turbine blade (6, 13), comprising a hollow blade body with a blade root and a base plate (12) arranged at a root-side end section (8) of the blade (6), which base plate (12) comprises a manhole (14) through which the interior of the blade (6) is accessible, **characterized in that** the base plate (12) is provided with mounting means (38) arranged at the or close to the manhole (14) and adapted to directly or indirectly mount at least one ladder (30, 34) to the base plate (12).

2. Wind turbine blade (6, 13) according to claim 1, wherein the base plate (12) does comprise one single manhole (14), in particular does not comprise more than one manhole (14).

3. Wind turbine blade (6, 13) according to one of the preceding claims, wherein the mounting means (38) are adapted to directly or indirectly mount a first ladder (30) at a first side of the base plate (12) facing away from the interior and a second ladder (34) at a second side of the base plate (12) facing to the interior of the blade (6).

4. Wind turbine blade (6, 13) according to one of the preceding claims, wherein the mounting means (38) are inextricably arranged at the base plate (12), or that the mounting means (38) are detachably arranged at the base plate (12), in particular wherein the manhole (14) has a circular or oval shape.

5. Wind turbine blade (6, 13) according to one of the preceding claims, wherein the mounting means (38) is or comprises at least one frame-shaped or plate-shaped support segment (20) surrounding the manhole (14) at least partly, in particular wherein the shape of the support segment (20) is U-like, circle-like, oval, or polygonal.

6. Wind turbine blade (6, 13) according to one of the preceding claims, wherein the mounting means (38) comprises two or more different mounting positions allocated in different positions of the support segment, in particular wherein the different mounting positions are allocated in different circumferential positions.

7. Wind turbine blade (6, 13) according to one of the preceding claims, wherein the base plate (12) is a single plate, or that the base plate (12) comprises a first plate (41) having a first manhole opening (43) and a second plate (42) arranged in parallel to the first plate (41) and comprising a second manhole opening (44), which manhole openings (43, 44) are flush with each other and build the manhole (14).

8. Ladder support assembly for a wind turbine,
wherein the ladder support assembly (19) comprises at least one frame-shaped or plate-shaped support segment (20), which is mounted to a base plate (12) of a wind turbine blade (6, 13) surrounding a manhole (14) in the base plate (12) at least partly,
wherein the ladder support assembly (19) comprises at least one mounting section (29, 35) for mounting a ladder (30, 34) to the ladder support assembly (19), and/or
wherein the ladder support assembly is configured to be mounted to a wind turbine blade (6, 13) according to one of the preceding claims.

9. Ladder support assembly according to claim 8,
wherein the ladder support assembly (19) comprises two mounting sections (29, 35), wherein, in the mounted state of the ladder support assembly (19), one of the mounting sections (29, 35) is arranged on each of the opposing sides of the base plate (12), and/or
wherein the ladder support assembly (19) comprises at least one platform segment (25), wherein the ladder support assembly (19) is arrangeable on the manhole (14) in such manner that the platform segment (25) extends through the manhole (14) and/or that the platform segment (25) is arranged on one side of the manhole (14) allowing a worker to pass through the manhole (14) on the platform segment (25).

10. Wind turbine equipped with at least one wind turbine blade (6, 13) according to one of the claims 1 to 7, and/or least one ladder support assembly (19) according to one of the claims 8 to 9.

11. Method for providing access to the interior of a hollow blade (6, 13) of a wind turbine (1), wherein the blade (6), 13) is attached to a rotatable hub (5) of the wind turbine (1), wherein the interior (10) of the blade (6) is accessible from the hub (5) through a manhole (14) in a base plate (12) at a root-side end section (8) of the blade (6, 13), comprising the steps of:
Arranging the blade (6, 13) in a first position, in which the manhole (14) is accessible to a worker from a stand surface (18) in the interior of the hub (5), wherein the stand surface (18) remains stationary during rotation of the hub (5),
the method being **characterized in that** it further comprises the steps of:
Mounting a ladder support assembly (19) to the base plate (12) at or in the vicinity of at least one edge section of the manhole (14),
Arranging the blade (6, 13) in a second position by rotating the hub (5), wherein a distance between the manhole (14) and the stand surface (18) is larger than in the first position, and
Mounting at least one ladder (30, 34) to the ladder support assembly (19) for accessing the interior of the blade (6, 13).

12. Method according to claim 11,
wherein the blade (6, 13) is oriented in the first position at an angle between 90° and 120° with respect to a vertically upward position of the blade (6, 13), and/or that the blade (6, 13) is oriented a vertically upwards or at an angle between 255° and 285° in the second position.

13. Method according to claim 11 or 12, wherein the ladder support assembly (19) is mounted at least at or in the vicinity of an upper edge section of the manhole (14) in the first position of the blade (6, 13).

14. Method according to one of the claims 11 to 13,
wherein the ladder support assembly (19) comprises at least one frame-shaped or plate-shaped support segment (20), which is mounted to the base plate (12) surrounding the manhole (14) at least partly, and/or
wherein the ladder support assembly (19) comprises at least one platform segment (25), wherein the ladder support assembly (19) is arranged at the manhole (14) in such manner that the platform segment (25) extends through the manhole (14) and/or that the platform segment (25) is arranged on the bottom side of the manhole (14) when the blade (6, 13) is in the second position..

15. Method according to one of the claims 11 to 14,
wherein the at least one ladder (30, 34) is hung to the ladder support assembly (19),
wherein two ladders (30, 34) are mounted to the ladder support assembly (19),
wherein the first ladder (30) is arranged on the side of the base plate (12) facing the interior of the hub (5) and wherein the second ladder (34) is arranged on the side of the base plate (12) facing the interior of the blade (6, 13), and/or
wherein the second ladder (34) is mounted to the ladder support assembly (19) by sliding it through the manhole (14) towards the interior of the blade (6, 13) on the ladder support assembly (19) and by attaching it on the ladder support assembly (19).

## Patentansprüche

1. Windenergieanlagenblatt (6, 13), umfassend einen hohlen Blattkörper mit einem Blattfuß und einer Grundplatte (12), die an einem fußseitigen Endabschnitt (8) des Blatts (6) angeordnet ist, wobei die Grundplatte (12) ein Mannloch (14) umfasst, durch das das Innere des Blatts (6) zugänglich ist, **dadurch gekennzeichnet, dass** die Grundplatte (12) mit Montagemitteln (38) versehen ist, die an oder nahe des Mannlochs (14) angeordnet und dazu ausgelegt sind, direkt oder indirekt mindestens eine Leiter (30, 34) an der Grundplatte (12) zu befestigen.

2. Windenergieanlagenblatt (6, 13) nach Anspruch 1, wobei die Grundplatte (12) ein einzelnes Mannloch (14) umfasst, insbesondere nicht mehr als ein Mannloch (14) umfasst.

3. Windenergieanlagenblatt (6, 13) nach einem der vorhergehenden Ansprüche, wobei die Montagemittel (38) dazu ausgelegt sind, direkt oder indirekt eine erste Leiter (30) an einer ersten Seite der Grundplatte (12), die dem Inneren abgewandt ist, und eine zweite Leiter (34) an einer zweiten Seite der Grundplatte (12), die dem Inneren des Blatts (6) zugewandt ist, zu montieren.

4. Windenergieanlagenblatt (6, 13) nach einem der vorhergehenden Ansprüche, wobei die Montagemittel (38) unlösbar an der Grundplatte (12) angeordnet sind, oder dass die Montagemittel (38) lösbar an der Grundplatte (12) angeordnet sind, insbesondere wobei das Mannloch (14) eine kreisrunde oder ovale Form aufweist.

5. Windenergieanlagenblatt (6, 13) nach einem der vorhergehenden Ansprüche, wobei das Montagemittel (38) mindestens ein rahmenförmiges oder plattenförmiges Stützsegment (20) ist oder umfasst, das das Mannloch (14) zumindest teilweise umgibt, insbesondere wobei die Form des Stützsegments (20) U-ähnlich, kreisähnlich, oval oder polygonal ist.

6. Windenergieanlagenblatt (6, 13) nach einem der vorhergehenden Ansprüche, wobei das Montagemittel (38) zwei oder mehr unterschiedliche Montagepositionen umfasst, die in unterschiedlichen Positionen des Stützsegments bereitgestellt sind, insbesondere wobei die unterschiedlichen Montagepositionen in unterschiedlichen Umfangspositionen bereitgestellt sind.

7. Windenergieanlagenblatt (6, 13) nach einem der vorhergehenden Ansprüche, wobei die Grundplatte (12) eine einzelne Platte ist, oder dass die Grundplatte (12) eine erste Platte (41) mit einer ersten Mannlochöffnung (43) und eine zweite Platte (42) umfasst, die parallel zur ersten Platte (41) angeordnet ist und eine zweite Mannlochöffnung (44) umfasst, wobei die Mannlochöffnungen (43, 44) miteinander bündig sind und das Mannloch (14) bilden.

8. Leiterstützanordnung für eine Windenergieanlage,
wobei die Leiterstützanordnung (19) mindestens ein rahmenförmiges oder plattenförmiges Stützsegment (20) umfasst, das an einer Grundplatte (12) eines Windenergieanlagenblatts (6, 13) montiert ist, die ein Mannloch (14) in der Grundplatte (12) zumindest teilweise umgibt,
wobei die Leiterstützanordnung (19) mindestens einen Montageabschnitt (29, 35) zum Montieren einer Leiter (30, 34) an der Leiterstützanordnung (19) umfasst, und/oder wobei die Leiterstützanordnung dazu ausgestaltet ist, an einem Windenergieanlagenblatt (6, 13) nach einem der vorhergehenden Ansprüche montiert zu werden.

9. Leiterstützanordnung nach Anspruch 8,
wobei die Leiterstützanordnung (19) zwei Montageabschnitte (29, 35) umfasst, wobei im montierten Zustand der Leiterstützanordnung (19) einer der Montageabschnitte (29, 35) auf jeder der entgegengesetzten Seiten der Grundplatte (12) angeordnet ist, und/oder
wobei die Leiterstützanordnung (19) mindestens ein Plattformsegment (25) umfasst, wobei die Leiterstützanordnung (19) auf dem Mannloch (14) derart anordenbar ist, dass sich das Plattformsegment (25) durch das Mannloch (14) erstreckt und/oder dass das Plattformsegment (25) auf einer Seite des Mannlochs (14) angeordnet ist, was es einem Arbeiter ermöglicht, durch das Mannloch (14) auf dem Plattformsegment (25) hindurchzugehen.

10. Windenergieanlage, die mit mindestens einem Windenergieanlagenblatt (6, 13) nach einem der Ansprüche 1 bis 7 und/oder mindestens einer Leiterstützanordnung (19) nach einem der Ansprüche 8 bis 9 ausgestattet ist.

11. Verfahren zum Bereitstellen eines Zugangs zum Inneren eines hohlen Blatts (6, 13) einer Windenergieanlage (1), wobei das Blatt (6), 13) an einer drehbaren Nabe (5) der Windenergieanlage (1) befestigt ist, wobei das Innere (10) des Blatts (6) von der Nabe (5) durch ein Mannloch (14) in einer Grundplatte (12) an einem fußseitigen Endabschnitt (8) des Blatts (6, 13) zugänglich ist, umfassend die folgenden Schritte:
Anordnen des Blatts (6, 13) in einer ersten Position, in der das Mannloch (14) für einen Arbeiter von einer Standfläche (18) im Inneren der Nabe (5) zugänglich ist, wobei die Standfläche (18) während einer Drehung der Nabe (5) stationär bleibt, wobei das Verfahren **dadurch gekennzeichnet ist, dass** es ferner die folgenden Schritte umfasst:
Montieren einer Leiterstützanordnung (19) an der Grundplatte (12) an oder in der Nähe von mindestens einem Randabschnitt des Mannlochs (14),
Anordnen des Blatts (6, 13) in einer zweiten Position durch Drehen der Nabe (5), wobei ein Abstand zwischen dem Mannloch (14) und der Standfläche (18) größer als in der ersten Position ist, und
Montieren mindestens einer Leiter (30, 34) an der Leiterstützanordnung (19) für einen Zugang zum Inneren des Blatts (6, 13).

12. Verfahren nach Anspruch 11,
wobei das Blatt (6, 13) in der ersten Position in einem Winkel zwischen 90° und 120° in Bezug auf eine vertikal nach oben gerichtete Position des Blatts (6, 13) ausgerichtet ist, und/oder dass das Blatt (6, 13) in der zweiten Position vertikal nach oben oder in einem Winkel zwischen 255° und 285° ausgerichtet ist.

13. Verfahren nach Anspruch 11 oder 12, wobei die Leiterstützanordnung (19) in der ersten Position des Blatts (6, 13) zumindest an oder in der Nähe von einem oberen Randabschnitt des Mannlochs (14) montiert wird.

14. Verfahren nach einem der Ansprüche 11 bis 13,
wobei die Leiterstützanordnung (19) mindestens ein rahmenförmiges oder plattenförmiges Stützsegment (20) umfasst, das an der Grundplatte (12) montiert ist, die das Mannloch (14) zumindest teilweise umgibt, und/oder
wobei die Leiterstützanordnung (19) mindestens ein Plattformsegment (25) umfasst, wobei die Leiterstützanordnung (19) derart an dem Mannloch (14) angeordnet ist, dass sich das Plattformsegment (25) durch das Mannloch (14) erstreckt und/oder dass das Plattformsegment (25) auf der Unterseite des Mannlochs (14) angeordnet ist, wenn sich das Blatt (6, 13) in der zweiten Position befindet.

15. Verfahren nach einem der Ansprüche 11 bis 14,
wobei die mindestens eine Leiter (30, 34) an der Leiterstützanordnung (19) aufgehängt wird,
wobei zwei Leitern (30, 34) an der Leiterstützanordnung (19) montiert werden, wobei die erste Leiter (30) auf der dem Inneren der Nabe (5) zugewandten Seite der Grundplatte (12) angeordnet wird und wobei die zweite Leiter (34) auf der dem Inneren des Blatts (6, 13) zugewandten Seite der Grundplatte (12) angeordnet wird, und/oder
wobei die zweite Leiter (34) an der Leiterstützanordnung (19) durch Schieben derselben durch das Mannloch (14) in Richtung des Inneren des Blatts (6, 13) auf die Leiterstützanordnung (19) und durch Anbringen derselben auf der Leiterstützanordnung (19) montiert wird.

## Revendications

1. Pale d'éolienne (6, 13) comprenant un corps de pale creux avec un pied de pale et une plaque de base (12) agencés au niveau d'une section d'extrémité du côté du pied (8) de la pale (6), ladite plaque de base (12) comprenant un trou d'homme (14) à travers lequel l'intérieur de la pale (6) est accessible, **caractérisée en ce que** la plaque de base (12) est dotée de systèmes de montage (38) agencés au niveau de ou près du trou d'homme (14) et adaptés afin d'être équipés directement ou indirectement d'au moins une échelle (30, 34) jusqu'à la plaque de base (12).

2. Pale d'éolienne (6, 13) selon la revendication 1, dans laquelle la plaque de base (12) comprend un trou d'homme unique (14), en particulier elle ne comprend pas plus d'un trou d'homme (14).

3. Pale d'éolienne (6, 13) selon l'une des revendications précédentes, dans lequel les systèmes de montage (38) sont adaptés afin d'être équipés, directement ou indirectement, d'une première échelle (30) sur un premier côté de la plaque de base (12) orienté à l'opposé de l'intérieur et d'une seconde échelle (34) sur un second côté de la plaque de base (12) orienté vers l'intérieur de la pale (6).

4. Pale d'éolienne (6, 13) selon l'une des revendications précédentes, dans laquelle les systèmes de montage (38) sont inextricablement agencés au niveau d'une plaque de base (12), ou les moyens de montage (38) sont agencés de manière détachable au niveau de la plaque de base (12), en particulier dans laquelle le trou d'homme (14) présente une forme circulaire ou ovale.

5. Pale d'éolienne (6, 13) selon l'une des revendications précédentes, dans laquelle les systèmes de montage (38) sont ou comprennent au moins un segment de support en forme de cadre ou de plaque (20) entourant le trou d'homme (14) au moins partiellement, en particulier dans lequel la forme du segment de support (20) est semblable à un U, à un cercle, ovale ou polygonale.

6. Pale d'éolienne (6, 13) selon l'une des revendications précédentes, dans laquelle les systèmes de montage (38) comprennent deux positions de montage différentes ou plus, situées dans des positions différentes du segment de support, en particulier dans laquelle les différentes positions de montage sont attribuées à différentes positions circonférentielles.

7. Pale d'éolienne (6, 13) selon l'une des revendications précédentes, dans laquelle la plaque de base (12) est une plaque unique, ou dans laquelle la plaque de base (12) comprend une première plaque (41) présentant une première ouverture de trou d'homme (43) et une seconde plaque (42) agencée de manière parallèle à la première plaque (41) et comprenant une seconde ouverture de trou d'homme (44), lesdites ouvertures de trou d'homme (43, 44) étant à ras l'une de l'autre et constituant le trou d'homme (14).

8. Ensemble de support d'échelle pour une éolienne,
dans lequel l'ensemble de support d'échelle (19) comprend au moins un segment de support en forme de cadre ou en forme de plaque (20), qui est monté sur une plaque de base (12) d'une pale d'éolienne (6, 13), entourant un trou d'homme (14) dans la plaque de base (12) au moins partiellement,
dans lequel l'ensemble de support d'échelle (19) comprend au moins une section de montage (29, 35) permettant de monter une échelle (30, 34) sur l'ensemble de support d'échelle (19), et/ou
dans lequel l'ensemble de support d'échelle est configuré afin d'être monté sur une pale d'éolienne (6, 13) selon l'une des revendications précédentes.

9. Ensemble de support d'échelle selon la revendication 8,
dans lequel l'ensemble de support d'échelle (19) comprend deux sections de montage (29, 35), dans lequel, dans l'état monté de l'ensemble de support d'échelle (19), une des sections de montage (29, 35) est agencée sur chacun des côtés opposés de la plaque de base (12), et/ou
dans lequel l'ensemble de support d'échelle (19) comprend au moins un segment de plate-forme (25), dans lequel l'ensemble de support d'échelle (19) peut être agencé sur le trou d'homme (14) de telle sorte que le segment de plate-forme (25) s'étende à travers le trou d'homme (14) et/ou que le segment de plate-forme (25) soit agencé sur un côté du trou d'homme (14) permettant à un travailleur de passer à travers le trou d'homme (14) sur le segment de plate-forme (25).

10. Éolienne équipée d'au moins une pale d'éolienne (6, 13) selon l'une des revendications 1 à 7, et/ou d'un ensemble de support d'échelle (19) selon l'une des revendications 8 à 9.

11. Procédé de fourniture d'accès à l'intérieur d'une pale creuse (6, 13) d'une éolienne (1), dans lequel la pale (6, 13) est fixée à un moyeu rotatif (5) de l'éolienne (1), dans lequel l'intérieur (10) de la pale (6) est accessible depuis le moyeu (5) à travers un trou d'homme (14) dans une plaque de base (12) dans une section du côté du pied (8) de la pale (6, 13) comprenant les étapes consistant à :
agencer la pale (6, 13) dans une première position, dans laquelle le trou d'homme (14) est accessible à un travailleur depuis une surface de support (18) à l'intérieur du moyeu (5), dans lequel la surface de support (18) reste fixe pendant la rotation du moyeu (5), le procédé étant **caractérisé en ce qu'**il comprend en outre les étapes consistant à :
monter un ensemble de support d'échelle (19) sur une plaque de base (12) au niveau ou à proximité d'au moins une section de bord du trou d'homme (14),
agencer la pale (6, 13) dans une seconde position en tournant le moyeu (5), dans lequel une distance entre le trou d'homme (14) et la surface de support (18) est supérieure à celle dans la première position, et
monter au moins une échelle (30, 34) sur l'ensemble de support d'échelle (19) afin d'accéder à l'intérieur de la pale (6, 13).

12. Procédé selon la revendication 11,
dans lequel la pale (6, 13) est orientée dans la première position selon un angle compris entre 90° et 120° par rapport à une position verticalement vers le haut de la pale (6, 13), et/ou la pale (6, 13) est orientée verticalement vers le haut ou selon un angle compris entre 255° et 285° dans la seconde position.

13. Procédé selon la revendication 11 ou 12, dans lequel l'ensemble de support d'échelle (19) est monté au moins au niveau ou à proximité d'une section de bord supérieur du trou d'homme (14) dans la première position de la pale (6, 13).

14. Procédé selon l'une des revendications 11 à 13,
dans lequel l'ensemble de support d'échelle (19) comprend au moins un segment de support en forme de cadre ou en forme de plaque (20), qui est monté sur la plaque de base (12) entourant le trou d'homme (14) au moins partiellement, et/ou dans lequel l'ensemble de support d'échelle (19) comprend au moins un segment de plate-forme (25), dans lequel l'ensemble de support d'échelle (19) est agencé au niveau du trou d'homme (14) de telle sorte que le segment de plate-forme (25) s'étende à travers le trou d'homme (14) et/ou en ce que le segment de plate-forme (25) soit agencé sur le coté inférieur du trou d'homme (14) quand la pale (6, 13) est dans la seconde position.

15. Procédé selon l'une des revendications 11 à 14,
dans lequel la au moins une échelle (30, 34) est accrochée à l'ensemble de support d'échelle (19),
dans lequel deux échelles (30, 34) sont montées sur l'ensemble de support d'échelle (19), dans lequel la première échelle (30) est agencée sur le côté de la plaque de base (12) orientée vers l'intérieur du moyeu (5) et dans lequel la seconde échelle (34) est agencée sur le côté de la plaque de base (12) orientée vers l'intérieur de la pale (6, 13), et/ou
dans lequel la seconde échelle (34) est montée sur l'ensemble de support d'échelle (19) en la faisant coulisser à travers le trou d'homme (14) vers l'intérieur de la pale (6, 13) sur l'ensemble de support d'échelle (19) et en la fixant sur l'ensemble de support d'échelle (19).
